(19) Europäisches Patentamt
European Patent Office
Office européen des brevets

(11) **EP 2 874 132 A2**

(12) **EUROPEAN PATENT APPLICATION**

(43) Date of publication:
**20.05.2015 Bulletin 2015/21**

(51) Int Cl.:
***G08G 1/065*** (2006.01)   ***G08G 1/01*** (2006.01)

(21) Application number: **14186573.3**

(22) Date of filing: **26.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.09.2013 GB 201317202**

(71) Applicant: **Thales Holdings UK Plc Addlestone, Surrey KT15 2NX (GB)**

(72) Inventor: **Hilditch, Albert Stephen Stockport, SK3 0XB (GB)**

(74) Representative: **Williams, Michael David Marks & Clerk LLP 1 New York Street Manchester M1 4HD (GB)**

(54) **Apparatus and method for managing traffic**

(57)     A method of generating an indication of a travel time of vehicles travelling between a first position and a second position. The method comprises receiving a first value $X(N)$, the first value $X(N)$ indicating a number of vehicles passing the first position in a first period, receiving a second value $Y(N)$, the second value $Y(N)$ indicating a number of vehicles passing the second position in the first period and generating an indication of a travel time $T(N)$ between the first position and the second position based on the first value $X(N)$ and second value $Y(N)$.

Fig. 1

EP 2 874 132 A2

**Description**

FIELD

This application is concerned with methods and systems for generating indications of travel times of vehicles.

BACKGROUND

Accurate and timely indications of current travel times of vehicles travelling particular sections of road could be used to facilitate the selection of appropriate traffic policies in order to control traffic flows to, for example, reduce congestion and the number of road traffic accidents. For example, variable speed limits may be set, additional lanes opened, and/or diversions placed. Estimated travel times that are not timely available or are inaccurate could lead to the implementation of sub-optimal, ineffective or detrimental traffic policies in response to observed conditions.

Further, in addition to reacting to changing conditions in real-time, it is desirable to be able to predict traffic conditions sufficiently far in advance that measures can be taken to avoid occurrence of events which may cause traffic disruption.

Known methods of monitoring traffic suffer from poor accuracy or fail to predict sufficiently far in advance to be useful. For example, while it is known to simulate traffic flows using finite element analysis, this is time-consuming, typically taking multiple hours to complete. Such simulations are therefore unhelpful for predicting current travel times or for simulating the near-term effects of traffic management policies. A corollary disadvantage is therefore methods of controlling traffic flows which use known methods to monitor traffic are not optimal. Improved methods of controlling traffic flows would be beneficial.

SUMMARY

According to a first aspect, there is provided a method of generating an indication of a travel time of vehicles travelling between a first position and a second position, comprising: receiving a first value $X(N)$, the first value $X(N)$ indicating a number of vehicles passing the first position in a first period; receiving a second value $Y(N)$, the second value $Y(N)$ indicating a number of vehicles passing the second position in the first period; and generating an indication of a travel time $T(N)$ between the first position and the second position based on the first value $X(N)$ and second value $Y(N)$.

In this way, a predicted travel time is generated based upon a number of vehicles passing the first and second positions. The first aspect does not, therefore, require the tracking of, or the determination of a speed of, particular vehicles. By the first aspect, there is also avoided the need to perform more complex operations such as finite element analysis in order to generate indications of travel times. The estimations of travel times can be used to output information to, or to control and/or influence flows of traffic. For example, the first aspect may be utilised to determine appropriate traffic policies and to output indications of those policies to control flows of traffic.

The method may further comprise determining a predicted number of vehicles $V(N)$ between the first position and the second position at the end of the first period, and generating the indication of a travel time $T(N)$ may be based at least in part on the predicted number of vehicles $V(N)$.

The predicted number of vehicles $V(N)$ may be determined by:

$$V(N) = V(N-1) + X(N) - Y(N)$$

where $V(N-1)$ is a predicted number of vehicles between the first position and the second position at the end of a second period preceding the first period.

An estimated average speed $S(N)$ of vehicles travelling between the first position and the second position during the first period may be determined according to:

$$S(N) = SL(N) \text{ if } V(N) = 0 \, ;$$

and

2

$$S(N) = \min(SL(N), D_S * Y(N) / V(N))$$

otherwise;
where $SL(N)$ is a speed limit of vehicles between the first position and the second position during the first period, $D_S$ is a distance between the first position and the second position measured in a first unit of distance.

An estimated average speed $S(N)$ of vehicles travelling between the first position and the second position during the first period may be determined by:

$$S(N) = SL(N) \text{ if } V(N) < A * D_S * L(N);$$

and

$$S(N) = \min(SL(N), D_S * Y(N) / V(N))$$

otherwise; where $SL(N)$ is a speed limit of vehicles between the first position and the second position during the first period, $L(N)$ is a number of available lanes between the first position and the second position during the first period, $D_S$ is a distance between the first position and the second position measured in a first unit of distance and A is a parameter representing a number of vehicles per lane, per said first unit of distance.

The estimated travel time $T(N)$ may be determined according to:

$$T(N) = D_S / S(N) \text{ if } S(N) \neq 0;$$

and

$$T(N) = T(N-1) + \text{period duration if } S(N) = 0;$$

wherein $T(N$-1) is a travel time of vehicles between the first and second positions during the second period and period duration is a duration of the first time period.

Receiving a first value $X(N)$ may comprise generating an estimate of a number of vehicles passing the first position during the first period. In this way, estimates of travel times, based on predicted numbers of vehicles passing the first location may be generated. Future traffic flows can therefore be modelled and traffic management policies be enacted to control the movement of vehicles on a road network.

The method may further comprise receiving a third value $Z(M)$ indicating a number of vehicles passing a third position in a second period, the second period being earlier than the first period; and receiving a first value $X(N)$ may comprise generating an estimate of a number of vehicles passing the first position during the first period based upon the third value $Z(M)$.

The third value $Z(M)$ may be received from a third sensor, the third sensor being arranged to count vehicles passing the third position.

Generating an estimate of a number of vehicles passing the first position during the first period may comprise processing a first profile, the first profile being representative of traffic flow between the first position and the second position.

The first profile may be selected from a plurality of profiles. For example, the first profile may be selected based upon the first period. The first profile may be selected for similarity to the first period.

The first profile may be selected and/or modified based upon at least one of a day type, an event type, a diversion, a roadside message and an existing predicted travel time. For example, the first profile may be selected based on a day, time, month, etc in which the first period occurs. The first profile may additionally or alternatively be selected based on events expected to affect vehicles during the first period.

Receiving a second value $Y(N)$ may comprise generating an estimate of a number of vehicles passing the second position in the first period.

Generating an estimate of a number of vehicles passing the second position in the first period may comprise determining a throughput between the first position and the second position. The throughput may be a likely throughput (or bandwidth) between the first position and the second position above which vehicles travelling between the first and second positions travel below a speed limit.

Determining a throughput may comprise receiving throughput indications from a throughput module, the throughput module comprising indications of at least one of a speed limit $SL(N)$ during the first period and a number of lanes $L(N)$ available during the first period.

$Y(N)$ may be calculated according to the equation:

$$Y(N + M) = L(N + M)(B - C * SL(N + M))$$

where $B$ is a parameter representing a maximum flow of vehicles per lane in a unit of time, $C$ is a parameter representing an adjustment to the maximum flow of vehicles per lane in a unit of. Put another way, the parameters $B$ and $C$ are together selected to represent a per lane throughput between the first and second positions.

Receiving the first value $X(N)$ may comprise receiving from a first sensor a first count. Receiving the second value $Y(N)$ may comprise receiving from a second sensor a second count. The first and second sensors may count vehicles passing the first position and the second position respectively.

The indication $T(N)$ may be generated in real-time. For example, the first period may be a period that has ended. Alternatively, the indication $T(N)$ may be generated for a future time. That is the first period may be a future period.

The method may further comprise transmitting the indication of a travel time $T(N)$ to a road-side notification device and displaying the indication of a travel time $T(N)$ on the road-side notification device. In this way, vehicles, and traffic flows more generally, may be controlled and/or influenced, for example to reduce congestion.

The method may further comprise generating a respective indication of a travel time $T(N)$ for each of a plurality of sections of road. The plurality of sections of road may together form a contiguous section of road. The method may further comprise generating an indication of a travel time for the contiguous section of road by summing each of the plurality of indications of travel times $T(N)$. In this way, predictions of travel times can be generated for larger distances than, for example, a distance between the first and second positions.

Receiving a first value $X(N)$ may further comprise modifying the first count received from the first sensor based on a predetermined sensor drift. Alternatively or additionally, receiving a second value $Y(N)$ may further comprise modifying the second count received from the second sensor based on a predetermined sensor drift.

The predetermined sensor drift may be determined based upon a difference between a number of vehicles counted by the first sensor and a number of vehicles counted by the second sensor over a predetermined period. For example, the predetermined period may be day, and may be a day immediately preceding the day in which the first period occurs.

According to a second aspect, there is provided a method of determining a number of vehicles passing a first position, comprising: receiving from a first sensor at least one first value and processing the at least one first value to determine a first indication, the first indication indicating a number of vehicles passing a first position during a first period of time; receiving from at least one second sensor at least one second value and using the at least one second value to determine a second indication, the second indication indicating a number of vehicles passing at least one second position during the first period of time; determining a difference between the first and second indications; receiving from the first sensor a third value indicating a number of vehicles passing the first position during a second period of time; and modifying the third value based on the determined difference.

In this way the effects of differences between two or more sensors may be mitigated. The sensors may be inductive-loop sensors.

The first period may comprise a plurality of sub-periods and receiving at least one first value may comprise receiving a respective first value for one or more of said sub-periods. Processing the at least one first value to determine an indication of a number of vehicles may comprise summing some or all of the received first values for each of the sub-periods of the first period.

Receiving at least one second value may comprise receiving a plurality of second values. At least one second value may be received from each of a plurality of second sensors. A plurality of second values may be received from each of the plurality of second sensors. For example, a respective second value may be received from each of a plurality of second sensors for each of a plurality of sub-periods of the first period. Using the at least one second value to determine a second indication may comprise summing all of the received second values.

The at least one second sensor may include the first sensor and the at least one second value may include the at least one first value. Using the at least one second value to determine a second indication, may comprise combining all first and second values received for the first period of time from each of a plurality of second sensors, including the first sensor.

Calculating the second indication may comprise calculating a mean number of vehicles recorded passing each of a plurality of second positions. Determining a difference between the first and second indications may comprise determining a percentage difference between the first indication and the mean number of vehicles recorded passing each of a plurality of second positions.

Modifying the third value based on the determined difference may comprise dividing the third value by the determined difference.

The first period of time may be a first day and the second period of time may occur during a second day after the first day.

The method may further comprise receiving from the first sensor a fourth value indicating a number of vehicles passing the first position during a third period of time, determining whether a lower than average number of vehicle lane changes is likely during the third period of time for a first portion of road including the first position, and modifying the third value only if it is determined that a lower than average number of vehicle lane changes is not likely for the first portion of road.

Determining whether a lower than average number of vehicle lane changes is likely may comprise determining whether at least one predetermined traffic management policy is in effect for the first portion of road during the third period of time.

The at least one predetermined traffic management policy may comprise at least one of a variable speed limit, lane closure, or extra lane provision.

The method may comprise receiving an indication of time periods during which one or more traffic management policies were in effect during the first period. The first indication and second indication may be calculated based on the indication of time periods during which one or more traffic management policies were in effect during the first period. For example, where determining the first and/or second indications may comprise summing only values received for sub-periods of the first period during which no traffic management policies were in effect for a portion of the road comprising the first and/or at least one second sensors.

According to a third aspect, there is provided a method of determining a number of vehicles passing a first position, comprising: receiving from a first sensor a first value indicating a number of vehicles passing the first position during a first period of time; receiving from a second sensor a second value indicating a number of vehicles passing a second position during the first period of time; determining a difference between the first and second values; receiving from the first sensor a third value indicating a number of vehicles passing the first position during a second period of time; and modifying the third value based on the determined difference.

In this way the effects of differences between the first and second sensors may be mitigated. The sensors may be inductive-loop sensors.

The first period of time may be a first day and the second period of time may occur during a second day after the first day.

The method may further comprise receiving from the first sensor a fourth value indicating a number of vehicles passing the first position during a third period of time, determining whether a lower than average number of vehicle lane changes is likely during the third period of time for a first portion of road including the first position, and modifying the third value only if it is determined that a lower than average number of vehicle lane changes is not likely for the first portion of road.

Determining whether a lower than average number of vehicle lane changes is likely may comprise determining whether at least one predetermined traffic management policy is in effect for the first portion of road during the third period of time.

The at least one predetermined traffic management policy may comprise at least one of a variable speed limit, lane closure, or extra lane provision.

According to a fourth aspect, there is provided a computer program comprising computer readable instructions configured to cause a computer to carry out a method according to any one of the first, second or third aspects.

According to a fifth aspect, there is provided a computer readable medium carrying a computer program according to the fourth aspect.

According to a sixth aspect, there is provided an apparatus for generating an indication of a travel time of vehicles travelling between a first position and a second position, comprising: a memory storing processor readable instructions; and a processor arranged to read and execute instructions stored in said memory; wherein said processor readable instructions comprise instructions arranged to control the computer to carry out a method according to the first, second or third aspects.

According to a seventh aspect, there is provided a system for generating an indication of a travel time of vehicles travelling between a first position and a second position, comprising: a first sensor arranged to generate and transmit to a processing device a first value $X(N)$, the first value $X(N)$ indicating a number of vehicles passing the first position in a first period; a second sensor arranged to generate and transmit to the processing device a second value $Y(N)$, the second value $Y(N)$ indicating a number of vehicles passing the second position in the first period; wherein the processing device comprises a receiver for receiving said first and second values and is arranged to generate an indication of a travel time $T(N)$ between the first position and the second position based on the first value $X(N)$ and second value $Y(N)$.

The processing device may be further arranged to generate an estimate of a number of vehicles passing the first position during a second period.

The system may further comprise a third sensor arranged to generate and transmit to a processing device a third value Z, the third value Z indicating a number of vehicles passing a third position in a third period, the third period being prior to the second period; wherein the processing device is arranged to generate the estimate of a number of vehicles passing the first position during the second period based on the third value Z.

The system may further comprise: a profiles module arranged to provide a plurality of profiles, each profile representing traffic flow between the first position and the second position in a predetermined circumstance; and the processing device may be arranged to receive at least a first profile from the profiles module and to generate said estimate of a number of vehicles passing the first position during the second period based on the first profile.

The processing device may be further arranged to generate an estimate of a number of vehicles passing the second position during the second period.

The system may further comprise a throughput module arranged to provide a plurality of throughput indicators, each throughput indicator being indicative of a potential throughput of traffic between the first and second positions in a predetermined circumstances, and the processing device may be arranged to receive at least a first throughput indicator from the throughput module and to generate said estimate of a number of vehicles passing the second position during the second period based on at least the first throughput indicator.

It will be appreciated that aspects can be implemented in any convenient way including by way of suitable hardware and/or software. For example, devices arranged to implement embodiments may be created using appropriate hardware components. Alternatively, a programmable device may be programmed to implement embodiments. The invention therefore also provides suitable computer programs for implementing aspects. Such computer programs can be carried on suitable carrier media including tangible carrier media (e.g. hard disks, CD ROMs and so on) and intangible carrier media such as communications signals.

One or more aspects, features or embodiments described herein, may be combined with any one or more other aspects, features or embodiments described herein. For example, features described with respect to the second aspect may be used in combination with the first aspect, and features described with respect to the first and second aspects may be implemented in systems such as that of the seventh aspect.

DRAWINGS

Figure 1 is a schematic illustration of a system for generating indications of a travel time of vehicles according to an embodiment of the present invention;

Figure 2 is a schematic illustration of components suitable for implementing a processing device depicted in the system of Figure 1;

Figure 3 is a flowchart showing processing carried out by the processing device of Figure 1 to generate an indication of a travel time;

Figure 4 is a schematic diagram of data used by the processing device of Figure 1 during the processing of Figure 3;

Figure 5 is a schematic illustration of a system for generating indications of a travel time of vehicles according to another embodiment of the present invention;

Figure 6 is a flowchart showing processing carried out by the processing device of Figure 5 to generate an indication of a travel time;

Figure 7 is a schematic illustration of data and modules used by the processing device of Figure 5 during the processing of Figure 6;

Figure 8 is a schematic illustration of a system for providing notifications to drivers;

Figure 9 is flowchart showing processing that may be carried out to cleanse traffic counts; and

Figure 10 is a flowchart showing processing to determine whether to cleanse a received traffic count.

DESCRIPTION

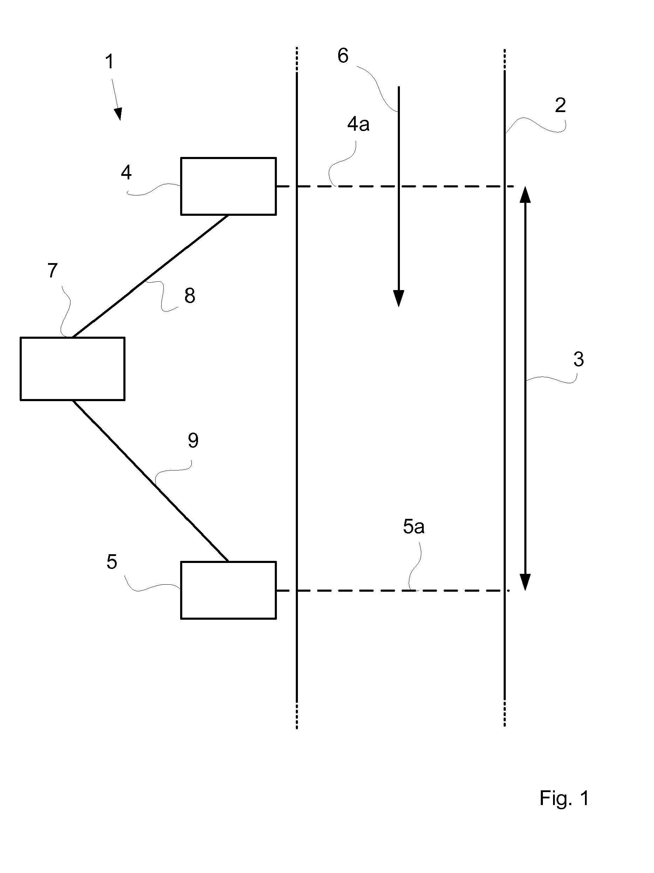

Embodiments disclosed herein are generally concerned with generation and provision of indications of traffic travel times for sections of road. Figure 1 schematically illustrates a system 1 for generating real-time accurate indications of travel times for a section 3 of a road 2. The section 3 of the road 2 is defined by two lines 4a, 5a spaced apart along the road 2 in the direction of traffic. The section 3 is defined as the portion of the road 2 between the lines 4a, 5a. Traffic sensors 4, 5 are respectively positioned adjacent the lines 4a, 5a. The sensors 4, 5 will be referred to as upstream sensor 4 and downstream sensor 5, for reasons which will be explained in due course. The upstream sensor 4 is configured to maintain a count of the number of vehicles passing the corresponding upstream line 4a, while the downstream sensor 5 is configured to maintain a count of the number of vehicles passing the corresponding downstream line 5a. The sensors 4, 5 are, in this example, inductive-loop based traffic counters. However, the reader will appreciate that any device capable of maintaining a count of vehicles will suffice. For example, radar based traffic counters could be used instead.
In this example, vehicles travel along the road 2 in a direction indicated by an arrow 6 (pointing down the page). Vehicles therefore pass the upstream line 4a before passing the downstream line 5a. This explains the nomenclature. The upstream sensor 4 is connected to a processing device 7 via an upstream connection 8, while the downstream sensor 5 is connected to the processing device 7 via a downstream connection 9. The connections 8, 9 allow the sensors 4, 5 to communicate with the processing device 7. These are illustrated as wired connections, though the reader will appreciate that wireless connections could alternatively be used. While shown as direct connections in the schematic illustration of Figure 1, each or either of the connections 8, 9 could be a part of a network connecting the sensors 4, 5 with the processing device 7. For example, the sensors 4, 5 and the processing device 7 may each be connected to, and communicate via, the Internet.
As described above, the sensors 4, 5 count the number of vehicles passing the lines 4a, 5a. In more detail, each sensor 4, 5 is configured to maintain a count of the number of vehicles passing its respective line 4a and 5a in a particular counting period. The upstream sensor 4 is further configured to periodically transmit an "upstream count" to the processing device 7 indicating how many vehicles have passed the upstream line 4a in the last counting period, while the downstream sensor 5 is configured to periodically transmit a "downstream count" to the processing device 7 indicating how many vehicles have passed the downstream line 5a in the last counting period. The counting period may be of any appropriate length of time and may be set in dependence upon application specific requirements. As an example only, the counting period may be one minute such that, once every minute, the sensors 4, 5 transmit a count of the number of vehicles which passed the respective lines 4a, 5a in the preceding minute.
In this example, the sensors 4, 5 are synchronised such that the processing device 7 receives the upstream and downstream counts at substantially the same time. Any method for synchronising the sensors 4, 5 and the processing device 7 may be used with the system 1, as will be readily apparent to the skilled person. For example, the system 1 may utilise a time server such as an Internet time server to maintain accurate timing information.
The reader will appreciate that synchronisation is not an essential feature for delivery of a functional system.

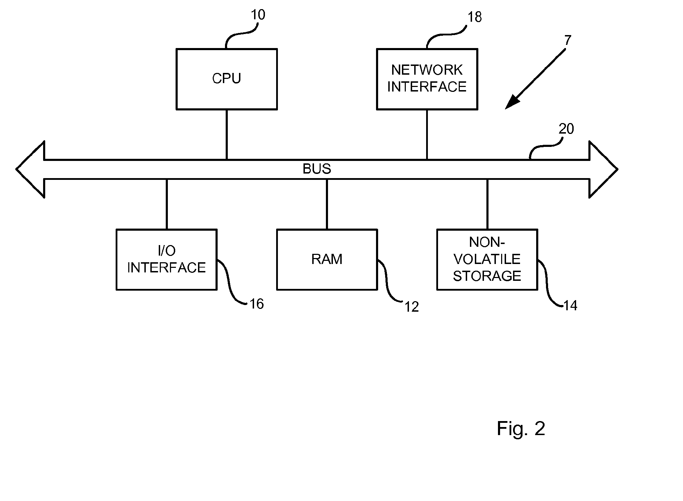

Figure 2 schematically illustrates an example arrangement of components used to implement the processing device 7 in accordance with some embodiments described herein. It can be seen that the processing device 7 comprises a central processing unit (CPU) 10 which is configured to read and execute instructions stored in a volatile memory 12 which takes the form of a random access memory. The volatile memory 12 stores instructions for execution by the CPU 10 and data used by those instructions. For example, instructions used to receive and process traffic counts from the sensors 4, 5 and to generate indications of travel times may be loaded into and stored in the volatile memory 12.
The processing device 7 further comprises non-volatile storage 14. It will be appreciated that any form of non-volatile storage may be used, such as solid state drive (SSD) or hard disk drive (HDD). Computer readable instructions for causing the processing device 7 to receive and process traffic counts and to generate indications of traffic times may be stored in the non-volatile storage 14. The processing device 7 further comprises an I/O interface 16 to which may be connected peripheral devices used in connection with the processing device 7. For example, one or more displays may be connected so as to display output from the processing device 7. Input devices may also be connected to the I/O interface 16, such as a keyboard and mouse. A network interface 18 allows the processing device 7 to be connected to other computing devices, such as the sensors 4, 5, so as to be able to send and receive information. The CPU 10, volatile memory 12, non-volatile storage 14, I/O interface 16, and network interface 18, are connected together by a bus 20.
It will be appreciated that the arrangement of components illustrated in Figure 2 is merely exemplary, and that the processing device 7 may comprise additional or fewer components than those illustrated in Figure 2. Indeed, the processing device 7 may comprise a plurality of computers, similar to, or arranged differently from, the processing device 7. That is, it is to be understood that the processing device 7 may be implemented using any appropriate configuration as will be readily appreciated by those skilled in the art.

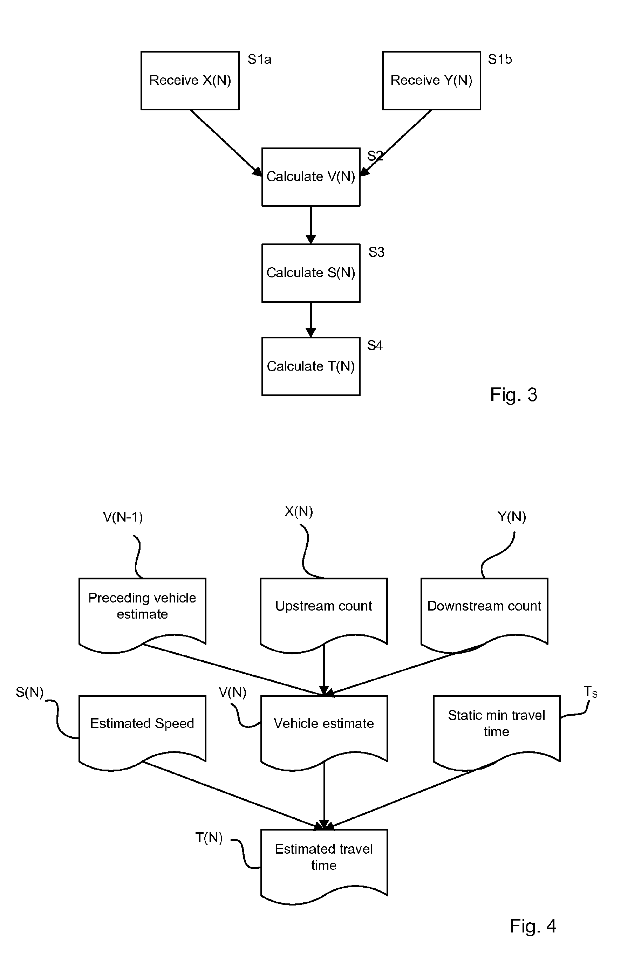

Figures 3 and 4 illustrate a process for determining an accurate indication of a current travel time for the section 3 of the road. Figure 3 is a flowchart showing processing carried out by the processing device 7, while Figure 4 illustrates data items used by the processing device 7 during the processing of Figure 3. The processing of Figure 3 is performed once every counting period.

At step S1 a of Figure 3, the processing device 7 receives, from the upstream sensor 4, a count $X(N)$ of the number of vehicles that have passed the upstream line 4a in the preceding counting period $N$. At substantially the same time, at step S1b the processing device 7 receives, from the downstream sensor 5, a count $Y(N)$ of the number of vehicles that have passed the downstream line 5a in the preceding counting period $N$.

Processing passes from steps S1 a, S1 b to step S2, in which the counts $X(N)$, $Y(N)$ are processed to calculate the number of vehicles $V(N)$ currently occupying the section 3 of the road 2. For example, the number of vehicles occupying section 3 of the road 2 may be calculated using equation (1):

$$V(N) = V(N-1) + X(N) - Y(N) \tag{1}$$

where $N$-1 is the counting period immediately preceding the counting period $N$, and $V(N-1)$ indicates the number of vehicles occupying section 3 of the road 2 in the counting period $N$-1.

It will be appreciated that where the processing of Figure 3 is carried out for the first time, such that there are no counting periods preceding the period $N$, an initial value of $V(N-1)$ will need to be selected. Additionally, the processing of Figure 3 may be restarted after a period of time in which no vehicles are present on the section 3 of the road 2. For example, it may be that vehicles are unlikely to traverse the section 3 of the road 2 at certain times. An initial value of $V(N-1)$ may therefore be calculated based upon a length of the section 3 and a current speed limit for the section 3. Alternatively, a default value of $V(N$-1) may be selected. A default value of $V(N-1)$ may be an average based on historical data, or may be an arbitrary value (e.g. zero).

Processing passes from step S2 to step S3, in which a speed $S(N)$ of traffic traversing the section 3 at the travel time $T(N)$ is calculated. The speed $S(N)$ provides an average speed over the section 3 and may be calculated using equation (2)

$$S(N) = \begin{cases} SL(N), & if(V(N) < A*D_S*L(N)); \ or \\ \min(SL(N), D_S.Y(N)/V(N)), & \text{otherwise} \end{cases} \tag{2}$$

where $SL(N)$ is the current speed limit in force on the section 3 of the road 2, $L(N)$ is the number of lanes currently in use, $D_S$ is the length of the section 3 in a unit of distance and A is a parameter the value of which may be selected based upon application specific requirements to represent a maximum quantity of vehicles that may be present in the section 3 beyond which the speed limit may not (on average) be reached.

The parameter $A$ may, for example, take a value of "5" and $D_S$ may be measured in kilometres. A value $5D_SL(N)$ in equation (2) indicates that up to five vehicles may occupy each lane, per kilometre of the section 3 before the speed limit $SL(N)$ cannot be reached on average. In other embodiments, other equations may be used to calculate the speed $S(N)$. The parameter $A$ may take values other than "5". In some embodiments, the parameter $A$ may vary in dependence upon the speed limit $SL(N)$, for example. The equation used to calculate the speed $S(N)$ may vary over time according to the number of lanes available (e.g. due to accidents, or the opening of additional lanes during congestion), obstruction, abnormal load, etc).

As an alternative example, the speed $S(N)$ may be calculated using equation (2a)

$$S(N) = \begin{cases} SL(N), & if(V(N) = 0); \ or \\ \min(SL(N), D_S.Y(N)/V(N)), & \text{otherwise} \end{cases} \tag{2a}$$

It will be noted that if $V(N) = 0$ (i.e. there are no vehicles on the section 3), equations (2), (2a) ensure that $S(N)$

= SL(N). It may also be noted that equations (2), (2a) ensure that the speed of traffic $S(N)$ is unlikely to be zero except in situations where $Y(N)$ is zero (such as, for example, situations in which traffic has come to a standstill).

It is to be understood that the current speed limit $SL(N)$ is not necessarily a legally enforced speed limit (although it may be), but rather refers to a maximum speed which it is determined may be reached on the section 3. It will further be appreciated that the current speed limit $SL(N)$ may vary over time in dependence upon a plurality of factors such as weather conditions, density of traffic, changes in legal speed limits, etc.

Processing passes from step S3 to step S4, at which the number $V(N)$ of vehicles occupying section 3 of the road 2 during the period $N$ and the current speed $S(N)$, are processed to generate an indication of a travel time $T(N)$ for the section 3 of the road 2 for the period $N$. The travel time $T(N)$ provides an indication of an expected time to traverse the monitored section 3, by a vehicle entering the section 3 immediately following the counting period $N$. For example, the estimated travel time $T(N)$ may be calculated using equation (3):

$$T(N) = \begin{cases} D_s / S(N), & if\ S(N) \neq 0;\ or \\ T(N-1) + \text{time period duration}, & if\ S(N) = 0 \end{cases} \qquad (3)$$

Alternatively, where $S(N)$ is equal to '0', an output indicating that traffic on the section 3 is stationary may be provided. Alternatively, an output indicating that a travel time cannot be generated, may be provided.

Travel time indications generated using the processing of Figure 3 relate to a counting period that has just ended. By selecting a counting period that is sufficiently short in relation to the speed with which traffic conditions change, the processing of Figure 3 can provide an effectively "real-time" indication of the current travel time for particular sections of road. Other embodiments may be used for generating indications of a future travel time for a section of road (as opposed to generating a "real-time" current indication). An example of processing which may be used to generate an indication of a future travel time is now described.

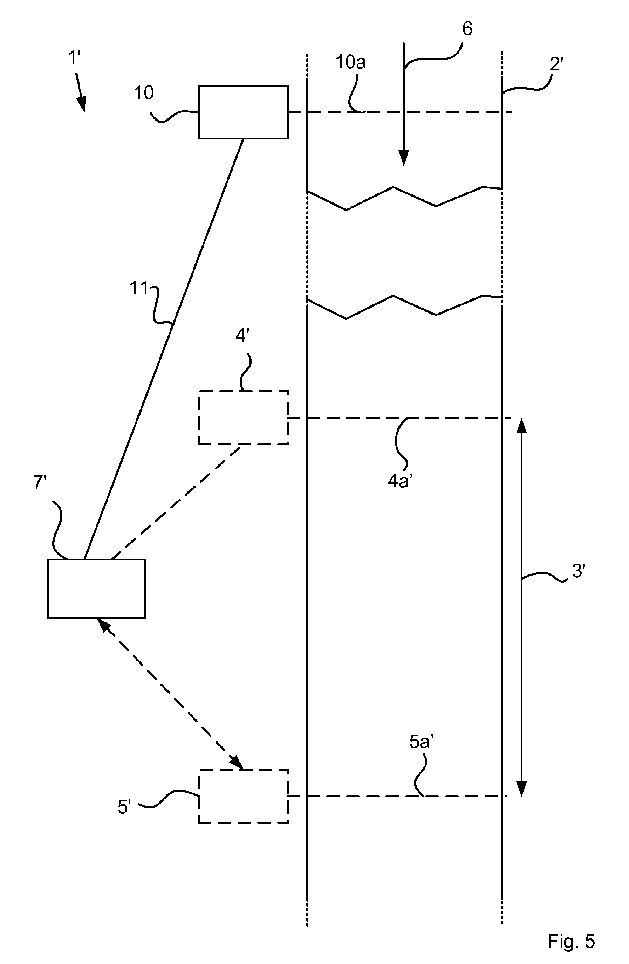

Figure 5 illustrates a system 1' for generating an indication of a future travel time for a section 3' of a road 2'. The system 1' is configured similarly to the system 1 and includes upstream and downstream lines 4a', 5a' defining a section 3' of a road 2'. Upstream and downstream sensors 4' and 5' are provided to maintain a count of the number of vehicles passing the upstream and downstream lines 4a', 5a' respectively. The upstream and downstream sensors 4', 5' connect to a processing device 7' and provide indications of their respective counts to the processing device 7' at the end of each counting period. The system 1' further comprises an additional sensor 10 connected to the processing device 7' by a connection 11. The supplementary sensor 10 is configured to maintain, for each counting period, a count of a number of vehicles passing a supplementary line 10a, and to transmit an indication of the count to the processing device 7' at the end of each counting period.

In this example, the supplementary line 10a is positioned at a point along the road 2' preceding the upstream line 4a' with respect to the direction of traffic (indicated by an arrow 6' in Figure 5). While, in the example of Figure 5, the line 10a is on the same road 2', as the lines 4a', 5a', it is to be understood that the line 10a may be positioned on a different road to the road 2'. Traffic count data from the sensor 10 may be used to predict a number of vehicles crossing the line 4a' in the near future, and so to predict future travel times for traffic traversing the section 3' of the road 2'.

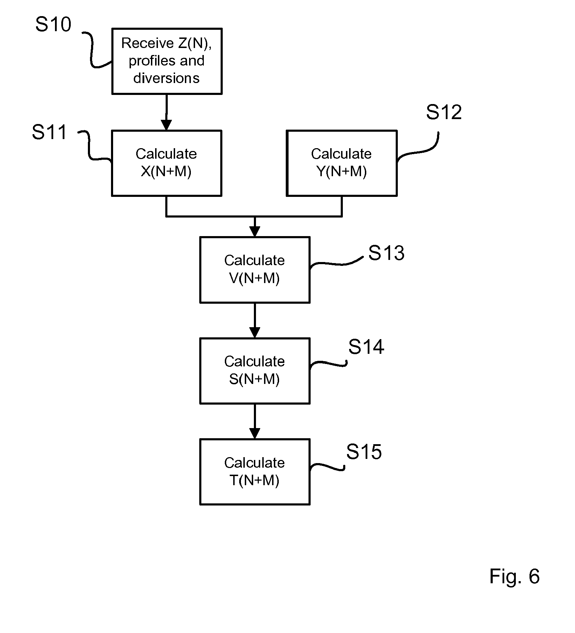

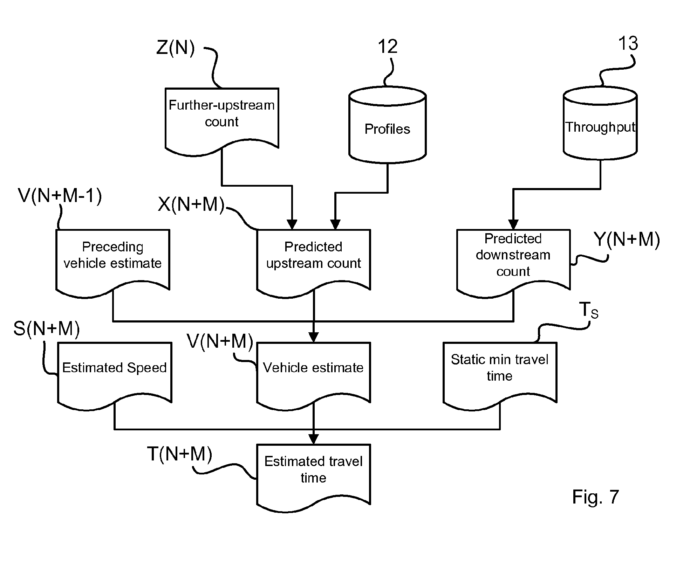

Figure 6 shows a flowchart illustrating processing carried out at the processing device 7' to generate an indication of a future travel time for the section 3'. Figure 7 illustrates data used by the processing device 7' during the processing of Figure 6. At a step S10 of Figure 6, the processing device 7' receives a count $Z(N)$ of the number of vehicles passing the supplementary line 10a during the counting period $N$ from the sensor 10. Processing passes from step S10 to step S11 at which a predicted number $X(N + M)$ of vehicles passing the upstream line 4a' is calculated based on the count $Z(N)$, where $M$ indicates a number of counting periods following the counting period $N$ for which it is desired to model traffic flows at the section 3'. The value of $M$ may be selected by a user of the system 1 in dependence upon how far into the future it is desired to model traffic flows at the section 3'.

As an example, where potential throughput does not change between the supplementary line 10a and the upstream line 4a', and where the average time taken for vehicles to traverse the distance between the supplementary line 10a and the upstream line 4a' is ten minutes, if it were desired to generate an indication of how many vehicles will pass the line 4a' ten minutes after the counting period $N$ (i.e. $M = 10$ minutes minutes), the predicted value of $X(N + M)$ generated at step S11 may be the same as the value of $Z(N)$ received at step S10.

The generation of $X(N+M)$ at step S11 may, however, take account of information stored within and provided by a profiles module 12. In particular, the profiles module 12 stores data indicating average and/or likely volumes of traffic passing the first line 4a'. The profiles module 12 therefore allows a user to model traffic entering the section 3 under different circumstances.

For example, the profiles module 12 may receive and store data indicating traffic count profiles for a plurality of "day types" such as for each day of the week, public holidays, weekends, Christmas day, etc. The traffic profiles may comprise traffic counts for each, or a subset of, time periods throughout that day. In some embodiments, the traffic counts for each time period may be based upon a last reported traffic count during the same time period on the same "day type". In other embodiments, the traffic counts for each time period may be determined by averaging traffic counts observed during the same time period on a plurality of previous days of the same day type. For example, a "Christmas day" profile may comprise a "9 am" traffic count based upon the mean of the traffic counts recorded at 9 am for the five previous years. The traffic counts observed in previous years may be weighted for relevance. Traffic counts may be weighted in dependence upon their age, such that, for example, observed traffic counts from five years ago contribute less to the predicted traffic count $X(N+M)$ than traffic counts observed one year ago. Alternatively, where the traffic count of a particular year was affected by a one-off or unusual event, the traffic count for that year may be weighted accordingly.

In addition to day type profiles, profiles may be provided for one or more event types, such as sporting events, concerts, weather events, etc. Such event type profiles may be used in place of, or in combination with, day type profiles. For example, where it is known that a one-off sporting event is likely to attract, say five thousand additional vehicles between 4 pm and 9 pm, a day type profile which would otherwise be selected may be modified based on an event profile to take the anticipated increase of vehicles into account.

In some embodiments, the profiles module 12 may store other data which may be used to generate more accurate predictions of $X(N+M)$. For example, in some embodiments, data indicating current roadside messages, travel time predictions and diversions may be stored. For example, if it is known that a roadside message is advising of the occurrence of an accident on the section 3', it may be assumed that a subset of the vehicles otherwise expected to traverse the section 3' (based on the appropriate traffic count profile) will instead follow a diversion. For example, if it is expected that 20% of vehicles will take a diversion avoiding the section 3', the value of $X(N+M)$ may be correspondingly reduced by 20%. Similarly, if it is known that a roadside message is advertising a longer than usual travel time, and that in such circumstances approximately 5% of vehicles will take an alternative route, the value of $X(N+M)$ may be correspondingly reduced by 5%.

It will be appreciated from the foregoing that by predicting the effect that diversions and delay messages may have on traffic traversing the section 3', those effects can be modelled before such diversions and delay messages are implemented/deployed.

At a step S12, a predicted future value $Y(N+M)$ of the number of vehicles passing the downstream line 5a' is calculated. The predicted future value $Y(N+M)$ may be based upon a potential throughput of the section 3'. Determination of the potential throughput of the section 3' may utilise a throughput module 13. The throughput module 13 comprises throughput indicators relating to factors that may affect how much traffic is able traverse the section 3'. For example, the throughput module 13 may store information for determining $SL(N+M)$ (i.e. the speed limit at the period $N+M$). $SL(N+M)$ may be determined through records of legal speed limits currently in force, and legal speed limits set to be in force at the future time $N+M$. Weather predictions may be stored to predict the impact of weather conditions on $SL(N+M)$. $L(N+M)$ (i.e. the number of lanes available for use at time $N+M$ may be predicted using information indicating lane closures due to the presence of road works, accidents, abnormally wide loads, etc., or lane openings during heavy traffic or "peak-times". $L(N+M)$ may be equal to '0' in the event that the section 3' is expected to be closed entirely during the period $N+M$.

The predicted future value $Y(N+M)$ may be calculated as a throughput per lane according to equation (4),

$$Y(N+M) = L(N+M)(B - C*SL(N+M)) \qquad (4)$$

Where $B$ is a parameter representing a maximum flow of vehicles per unit of time (e.g. vehicles per minute), per lane, sustainable on a normal road, $C$ is a parameter that, together with the estimated speed-limit $SL(N+M)$, adjusts the maximum flow of vehicles per unit of time per lane to account for the effect of the speed limit on the maximum sustainable flow. In one example, for a speed limit $SL(N)$ of 1 km/minute, and a value of $B$ of '33 vehicles per minute per lane', a value of $C$ of '3' reduces the maximum sustainable flow from 33 vehicles per minute to '30 vehicles per minute per lane'. In this example, if two lanes are available (i.e. $L(N+M) = 2$), $Y(N+M) = 60$, thereby providing a prediction that 60 vehicles will pass the downstream line 5a' in the period $N+M$. It will be appreciated, however, equation (4) is exemplary and that the predicted future value $Y(N+M)$ may be calculated using any appropriate method.

The profiles module 12 and the throughput module 13 may be implemented in any appropriate way. For example, either or both of the profiles module 12 and the throughput module 13 may be external to the processing device 7, and accessed over a network. Alternatively, the profiles and throughput modules 12, 13 may be implemented as internal components of the processing device 7.

Processing passes from steps S11 and S12 to step S13 at which a predicted future number of vehicles $V(N+M)$ between the upstream and downstream lines 4a', 5a' is calculated. For example, the number $V(N+M)$ may be calculated according to equation (5).

$$V(N+M) = V(N+M-1) + X(N+M) - Y(N+M) \qquad (5)$$

Processing passes from step S13 to step S14 at which a predicted speed $S(N+M)$ of traffic traversing the section 3' is calculated. The predicted speed $S(N+M)$ may be calculated according to equation (6).

$$S(N+M) = \begin{cases} SL(N+M), & \text{if } V(N+M) < A*D_s*L(N+M); \text{ or} \\ \min(SL(N+M), D_s*Y(N+M)/V(N+M)), \text{otherwise} \end{cases} \qquad (6)$$

As an alternative example, the predicted speed $S(N+M)$ may be calculated using equation (6a)

$$S(N+M) = \begin{cases} SL(N+M), & \text{if}(V(N+M)=0); \text{ or} \\ \min(SL(N+M), D_s.Y(N+M)/V(N+M)), & \text{otherwise} \end{cases} \qquad (6a)$$

Processing passes from step S14 to step S15 at which an indication of a predicted future travel time $T(N+M)$ is generated. For example, the value $T(N+M)$ may be obtained using equation (7).

$$T(N+M) = \begin{cases} D_s/S(N+M), & \text{if } S(N+M) \neq 0; \text{ or} \\ T(N+M-1) + \text{time period duration}, & \text{otherwise} \end{cases} \qquad (7)$$

The value $T(N+M)$ therefore provides an indication of an expected time for traversal of the section 3' by a vehicle entering the section 3' after the period $N+M$.

From the preceding description, it will be understood that generating an indication of a future travel time for the section 3' of the road 2' does not require traffic counts to be received from the sensors 4', 5'. The sensors 4', 5' may therefore not be present in the embodiment described above with reference to Figures 5, 6, 7 as illustrated by the depiction in Figure 5 of the sensors 4', 5' in dashed outline.

While the processing of Figure 6 utilises real-time values of $Z(N)$ from the sensor 10, in other embodiments, the values of the sensor 10 may also be modelled. That is, with reference to Figure 6, at step S10, in place of receiving values of $Z(N)$ from the sensor 10, modelled values of $Z(N)$ may be received instead. In this way, for example, it is possible to model the effect of a diversion (i.e. reducing the number of vehicles passing the line 10a) on the predicted travel time $T(N+M)$ calculated at step S15. Such modelled values of $Z(N)$ may be based upon profiles module 12 and the throughput module 13, or on counts received from sensors further upstream of the sensor 10.

The ability to calculate a predicted future value of the travel time for a particular section 3' of the road 2' allows users to model specific traffic scenarios in advance. For example, if road works are planned along the section 3' such that throughput is reduced (e.g. a lane will be closed), the processing of step S12 to calculate $Y(N+M)$ can be updated to reflect the reduced capacity, and indications of travel times $T(N+M)$ generated accordingly to model traffic flows along the section 3' over a desired number of periods.

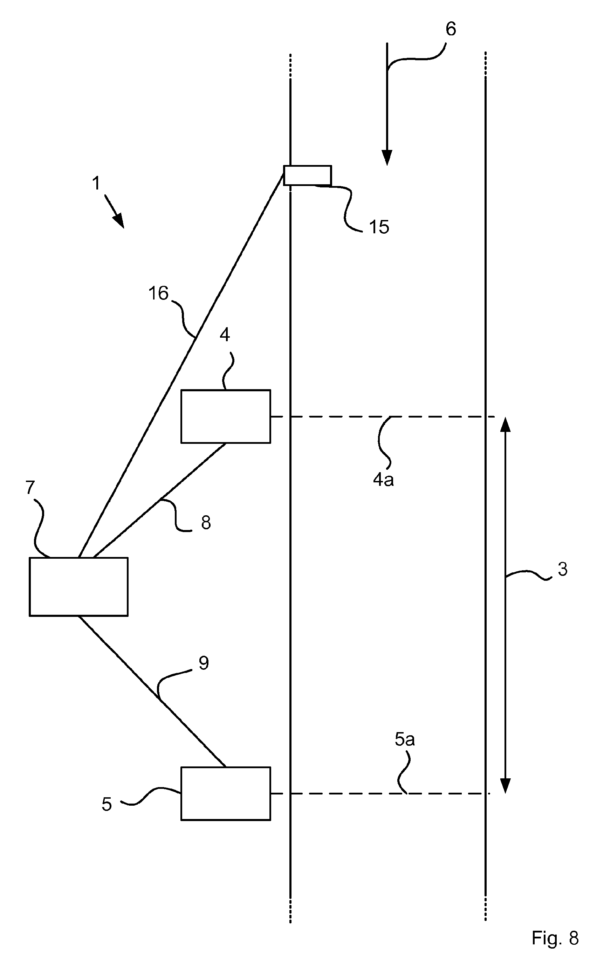

Embodiments described above may be used to control traffic flows along sections of road. The generation of indications of travel times described above may be used to determine and implement traffic policies. For example, speed limits may be set, diversions implemented or lanes opened/closed on particular sections of road in dependence upon the indications of travel times generated in accordance with described embodiments. In this way, traffic flows which would otherwise proceed in one (possibly undesirable, dangerous or sub-optimal) way can be made, through the use of one or more embodiments described above, to proceed differently. Figure 8 illustrates a further example embodiment in which a notification device 15 has been added to the system 1. The notification device 15 comprises a display (not shown) visible to drivers of vehicles on the road 2. A connection 16 between the notification device 15 and the processing device 7 allows instructions to be sent from the processing device 7 to the notification device 15 to update the display in response to predicted travel times. For example, the display of the notification device 15 may output the generated indications of travel times for particular sections of road. In this way, drivers may actively choose to proceed along, or choose to avoid, those sections.

Embodiments described above may be used to calculate current and/or predicted travel for longer sections of road by summing travel times calculated and/or predicted for a plurality of contiguous sections of road using embodiments described above. As an example, travel time predictions calculated according to embodiments described above may be used to provide improved data to the Travel Time Variable Message Sign (TTVMS) system used by the UK Highways Agency. The TTVMS system uses a plurality of notification devices at positions throughout the UK road network to provide road users with indications of travel times between sections of road, for example between junctions of motorways. Travel time predictions provided by the TTVMS system currently utilise number plate recognition to track and time individual vehicles traversing a section of road to infer likely travel times of other vehicles. Improved travel time predictions may therefore be provided by embodiments described above. Typically, more than two than two traffic count sensors may be provided on the sections of road for which the TTVMS system aims to provide travel time indications. As such, a plurality of current and/or predicted travel times may be calculated for a section of road, and those current and/or predicted travel times may be combined to provide a predicted travel time for the aggregate section of road.

Alternatively or additionally, roadside displays may be used to display traffic management policies to be implemented in response to the generated indications of travel times. For example, with reference to Figure 8, speed limits may be set to limit the number of vehicles passing the line 4a in each counting period. Such speed limits may be set automatically, where for example, the indications of travel times exceed a predetermined value. In this way, traffic that would otherwise proceed along a section of road at one speed will proceed along the section of road at a different speed. Additionally, embodiments of the present invention may be used to implement diversions. For example, where it is determined using embodiments described above that a current or predicted travel time for a particular section of road exceeds a threshold for that section of road, notifications of diversions may be output to notification devices positioned at points in a road network preceding that section of road. In this way, traffic which would otherwise traverse the section of road will instead take alternative routes which do not include the section of road. Alternatively or additionally, where it is determined that a current or predicted travel time for a particular section of road exceeds a predetermined threshold, in some embodiments, notifications can be output at notification devices within the vicinity of the section of road, indicating the opening of additional lanes (such as a hard shoulder). In this way, traffic which would otherwise not utilise the additional lane will instead utilise the additional lane. It will be appreciated that in other embodiments, additional methods of controlling traffic are possible.

It will be appreciated that additionally or alternatively, embodiments may be used to output information, and or instructions to other devices. For example, information may be transmitted to notification devices within vehicles (such as mobile telephones, satellite navigation systems, in-vehicle displays, etc). In addition, vehicles may be fitted with control devices (such as automatic speed limiters) responsive to outputs generated in accordance with embodiments described herein. For example, in one embodiment, where it is determined that a travel time for a section of road exceeds a predetermined threshold for that section of road, a variable speed limit may be set, and instructions transmitted to vehicles traversing that section of road. A receiving device aboard a vehicle traversing the section of road may control a speed of the vehicle in accordance with the received instruction by, for example, automatically adjusting a maximum speed of a speed limiter (or governor).

By the above examples, it will be appreciated that embodiments of the invention may be used to control vehicles and traffic flows more generally.

Commonly, traffic counting sensors comprise inductive-loops positioned under the road surface. Typically, one inductive-loop is provided per lane. Each inductive loop provides an analogue signal to a counting device arranged to analyse peaks and troughs in the analogue signal caused by the passage of vehicles over the inductive loop. It is has been determined that adjacent traffic count sensors (such as the sensors 4, 5 of Figure 1), when implemented using inductive-loops, may provide traffic counts that differ by as much as 1% over a day, even for closed stretches of road (i.e. stretches of road in which there are no entry points or exit points such that vehicles that pass one traffic count sensor must pass the other and vice versa). The difference between vehicle counts of adjacent sensors may be referred to as "sensor drift". The effects of sensor drift may be compounded when calculating $V(N)$ according to equation (1). For example, in some circumstances a calculated value of $V(N)$ may be inaccurate by as much as a factor of around 3 or 4 as a result of sensor drift.

In order to mitigate the effects of differences between values of $X(N)$ and $Y(N)$ obtained from inductive-loop based sensors, data received from such traffic count sensors may be adjusted in a "cleansing" operation. An example of a data cleansing operation that may be performed in some embodiments is now described with reference to the system of Figure 1. In the present example the data cleansing operation is operable to equalise the total count of the number of vehicles crossing the upstream line 4a in a one-day period (i.e. the sum of all counts $X(N)$ over the one-day period), with the total count of the number of vehicles crossing the downstream line 5a during the same period (i.e. the total sum of all counts $Y(N)$ over the same one-day period). An equalised value of the counts received for that day may then be stored. The data cleansing operation may comprise applying a correction factor to received values of $X(N)$ and/or $Y(N)$. In some embodiments, the correction factor can be determined from the previous day's total counts for $X(N)$ and/or $Y(N)$.

Referring again to Figure 1, it is to be assumed that the section 3 is a closed section of road. It is further to be taken that the total number of vehicles registered by the sensor 4 as crossing the line 4a on a particular day is 1.1% greater than the total number of vehicles registered by the sensor 5 as crossing the line 5a on the same day. In this case, during a following day, each $X(N)$ value generated by the sensor 4 may be reduced by 1.1%.

Alternatively, a period other than a preceding day may be used for determination of the correction factor. For example, a recorded difference over a longer period such as a number of preceding days, weeks, etc., or a shorter period such as the preceding hour, two hours, etc. may be used as a basis for determining the correction factor to apply to future values received from the sensors 4, 5. It will also be appreciated that while in the example above, $X(N)$ is modified by the correction factor, either or both of $X(N)$ or $Y(N)$ may be modified. For example, where the sensor 4 records 1% fewer vehicles over a day than the sensor 5, future values of $X(N)$ may be increased by 0.5% and future values of $Y(N)$ reduced by 0.5%.

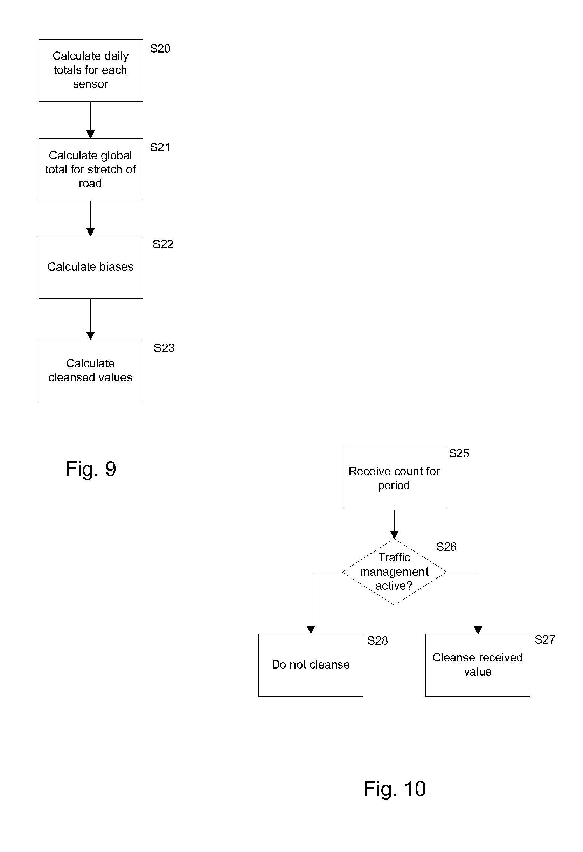

The data cleansing operation may utilise counts from more than two sensors. Figure 9 is flowchart showing a further example of processing that may be carried out to cleanse traffic counts received from a plurality of traffic sensors on a section of road. For example, the processing of Figure 9 may be performed by the processing device 7. In the processing of Figure 9, the processing device receives traffic counts from each of $i$ traffic count sensors along a stretch of road. Each of the $i$ traffic count sensors provides counts $X_i(N)$ of a number of vehicles that have passed that traffic count sensor in a preceding period $N$. At step S20 of Figure 9, the processing device determines, for each traffic count sensor, a total count $X_i$ of the number of vehicles that have passed that traffic count sensor within a predetermined number of periods. For example, the predetermined number of periods may be all periods in a day (e.g. a 24-hour period).

Processing passes from step S20 to step S21 at which the mean, $X$, of the total counts determined at step S20 is calculated. That is, at step S21, the processor determines:

$$X = (\sum X_i)/i \tag{8}$$

Processing passes to step S22 at which a bias $B_i$ is calculated for each of the $i$ traffic count sensors, where:

$$B_i = X_i / X \tag{9}$$

Processing then passes to step S23 at which a cleansing operation is performed on counts received from one or more of the traffic count sensors. For example, the cleansing operation may comprise determining a total cleansed traffic count for a predetermined number of periods $N$, according to:

$$C_i = X_i / B_i \tag{10}$$

Alternatively, the cleansing operation at step S23 may comprise determining individual cleansed traffic counts for one or more particular periods $N$ using, e.g.:

$$C_i(N) = X_i(N) / B_i \tag{11}$$

The cleansing operation may be applied to all, some or only one of the $i$ traffic count sensors.

In some embodiments, traffic counts cleansed at step S23 may be traffic counts received during subsequent time periods. For example, biases calculated for one day may be used to cleanse traffic counts received on a subsequent day.

It has been determined that differences in a number of vehicles counted may be caused by vehicles changing lanes while passing an inductive-loop based sensors. For example, due to differences in the way in which different inductive-loop based sensors operate, where a vehicle changes lane, that vehicle may be counted twice (i.e. may be counted once by an inductive loop in each lane) or may not be counted at all (i.e. may be counted by neither inductive loop). As such, changes to currently enforced traffic management policies and road conditions may reduce the amount by which adjacent inductive-loop based sensors erroneously register differing numbers of vehicles. For example, during peak hours variable speed limits may be enforced on sections of road, in order to increase road capacity and reduce congestion.

It has been found that while variable speed limits are enforced, the number of vehicles registered by adjacent inductive-loop based sensors may not differ or may differ by a smaller amount. This may be because while variable speed limits are in force, vehicles travel at substantially the same speed, resulting in less frequent lane changes. As such, when variable speed limits are enforced, the vehicle counts recorded by adjacent inductive-loop based sensors may not need adjusting. In some embodiments, therefore, a correction factor is only applied for those periods in which variable speed limits are not enforced. For example, at step S23, the cleansing operation may be performed only for those periods *N* during which traffic management policies are not active. Processing that may be carried out at step S23 to account for traffic management policies is illustrated in Figure 10.

At step S25 a count for a particular period *N* is obtained. At step S26 it is determined whether traffic management was active when the count was recorded. For example, if the count is received in real-time at step S25, it may be determined whether traffic management is currently active for the stretch of road carrying the sensor from which the count was received. Alternatively, if the count was received in the past, it may be determined whether traffic management was in place on the stretch of road carrying the sensor from which the count was received at the time that the count was received.

If it is determined at step S26 that traffic management was active when the count was received, processing passes from step S26 to step S27 at which the count is cleansed based upon the processing described above with reference to Figure 9. On the other hand, if it is determined at step S26 that traffic management was not active when the count was received, processing passes from step S26 to step S28 and the count is not cleansed.

Traffic management policies other than variable speed limits may also prevent or reduce lane changes during periods in which those traffic management policies are in force, such that a correction factor need not be applied to traffic counts received during those periods. For example, lane closures and extra lane provision (e.g. use of a hard shoulder as a traffic lane) may prevent or suppress lane changes.

Where the values of $X_i(N)$ are modified to take account of sensor drift, the actual values recorded by each sensor may nonetheless be recorded in order to determine appropriate correction factors to be applied to values of $X_i(N)$ received in future periods.

In some embodiments, a timetable of traffic management operations may be utilised to create reduced totals, averages and biases at steps S21, S22 and S23 based on traffic management policies. For example, at step S21, a reduced daily total $X_i^{red}$ may be calculated by summing only those values $X_i(N)$ that occurred when traffic management was not in force. At step S22, a reduced total $X^{red} = (\sum X_i^{red})/i$ may then be calculated. Finally, at step S22, a reduced bias value $B_i^{red} = X_i^{red} / X^{red}$ may be calculated and used for cleansing at step S23. In this way, the biases would be calculated to account for traffic management policies.

A timetable of expected traffic management control periods may be utilised to determine when to apply correction factors to future traffic counts.

The above description has described how accurate and timely indications of current or predicted travel times may be generated, and how these may be used for traffic management. Further modifications and applications of the present invention will be readily apparent to the appropriately skilled person from the teaching herein, without departing from the scope of the appended claims.

**Claims**

1. A method of generating an indication of a travel time of vehicles travelling between a first position and a second position, comprising:

receiving a first value *X(N),* the first value *X(N)* indicating a number of vehicles passing the first position in a first period;
receiving a second value *Y(N),* the second value *Y(N)* indicating a number of vehicles passing the second position in the first period;
determining a predicted number of vehicles *V(N)* between the first position and the second position at the end of the first period; and

generating an indication of a travel time *T(N)* between the first position and the second position based on the first value *X(N)* and second value *Y(N)* based at least in part on the predicted number of vehicles *V(N)*.

2. The method of claim 1, wherein the predicted number of vehicles *V(N)* is determined by:

$$V(N) = V(N-1) + X(N) - Y(N)$$

where *V(N-1)* is a predicted number of vehicles between the first position and the second position at the end of a second period preceding the first period.

3. The method of claim 2, wherein an estimated average speed *S(N)* of vehicles travelling between the first position and the second position during the first period is determined according to:

$$S(N) = SL(N) \text{ if } V(N) = 0;$$

and

$$S(N) = \min(SL(N), D_S * Y(N) / V(N))$$

otherwise;

where *SL(N)* is a speed limit of vehicles between the first position and the second position during the first period, $D_S$ is a distance between the first position and the second position measured in a first unit of distance.

4. The method of claim 3, wherein the estimated travel time *T(N)* is determined according to:

$$T(N) = D_S / S(N) \text{ if } S(N) \neq 0;$$

and

$$T(N) = T(N-1) + \text{period duration if } S(N) = 0;$$

wherein *T(N-1)* is a travel time of vehicles between the first and second positions during the second period and period duration is a duration of the first time period.

5. The method of any one of claims 1 to 4, wherein receiving a first value *X(N)* comprises generating an estimate of a number of vehicles passing the first position during the first period.

6. The method of any one of claims 1 to 5, further comprising:

receiving a third value Z(M) indicating a number of vehicles passing a third position in a second period, the second period being earlier than the first period;
wherein receiving a first value *X(N)* comprises generating an estimate of a number of vehicles passing the first position during the first period based upon the third value *Z(M)* ; and
wherein the third value *Z(M)* is optionally received from a third sensor, the third sensor being arranged to count vehicles passing the third position.

7. The method of any of claims 5 to 6, wherein generating an estimate of a number of vehicles passing the first position during the first period comprises processing a first profile, the first profile being representative of traffic flow between the first position and the second position;
wherein the first profile is optionally selected from a plurality of profiles, and is optionally selected from the plurality of profiles based upon the first period.

8. The method of any preceding claim, wherein receiving a second value *Y(N)* comprises generating an estimate of a number of vehicles passing the second position in the first period;
wherein generating an estimate of a number of vehicles passing the second position in the first period optionally comprises determining a throughput between the first position and the second position; and
wherein determining a throughput optionally comprises receiving throughput indications from a throughput module, the throughput module comprising indications of at least one of a speed limit *SL(N)* during the first period and a number of lanes *L(N)* available during the first period.

9. The method of claim 8, wherein *Y(N)* is calculated according to the equation:

$$Y(N+M) = L(N+M)(B - C*SL(N+M))$$

where Band C are parameters selected to represent a per lane throughput between the first and second positions.

10. The method of any preceding claim, wherein the indication *T(N)* is generated for a future time.

11. The method of claim any preceding claim, wherein receiving the first value *X(N)* comprises receiving from a first sensor a first count and wherein receiving the second value *Y(N)* comprises receiving from a second sensor a second count, the first and second sensors being arranged to count vehicles passing the first position and the second position respectively; and
wherein receiving a first value *X(N)* further comprises modifying the received first count based on a predetermined sensor drift; and/or
wherein receiving a second value *Y(N)* further comprises modifying the received second count based on a predetermined sensor drift.

12. The method of claim 14, wherein the predetermined sensor drift is determined based upon a difference in a number of vehicles counted by the first sensor to a number of vehicles counted by the second sensor over a predetermined period;
wherein optionally the predetermined period is a previous day.

13. A method of determining a number of vehicles passing a first position, comprising:

receiving from a first sensor at least one first value and using the at least one first value to determine a first indication, the first indication indicating a number of vehicles passing a first position during a first period of time;
receiving from at least one second sensor at least one second value and using the at least one second value to determine a second indication, the second indication indicating a number of vehicles passing at least one second position during the first period of time;
determining a difference between the first and second indications;
receiving from the first sensor a third value indicating a number of vehicles passing the first position during a second period of time; and
modifying the third value based on the determined difference.

14. The method of claim 13, further comprising:

receiving from the first sensor a fourth value and using the fourth value to determine an indication of a number of vehicles passing the first position during a third period of time;
determining whether a lower than average number of lane changes is likely during the third period of time for a first portion of road including the first position; and
modifying the third value based on the determined difference only if it is determined that a lower than average number of lane changes is not likely for the first portion of road.

15. The method of claim 14, wherein determining whether a lower than average number of lane changes is likely comprises determining whether at least one predetermined traffic management policy is in effect for the first portion of road during the third period of time.

Fig. 1

Fig. 2

Fig. 3

Fig. 4

Fig. 5

S10 — Receive Z(N), profiles and diversions

S11 — Calculate X(N+M)

S12 — Calculate Y(N+M)

S13 — Calculate V(N+M)

S14 — Calculate S(N+M)

S15 — Calculate T(N+M)

Fig. 6

Z(N)

Further-upstream
count

12

Profiles

13

Throughput

V(N+M-1)

X(N+M)

Preceding
vehicle estimate

Predicted
upstream count

Predicted
downstream
count

Y(N+M)

S(N+M)

V(N+M)

$T_S$

Estimated Speed

Vehicle estimate

Static min travel
time

T(N+M)

Estimated travel
time

Fig. 7

Fig. 8

S20

Calculate daily
totals for each
sensor

S21

Calculate global
total for stretch of
road

S22

Calculate biases

S23

Calculate
cleansed values

Fig. 9

S25

Receive count for
period

S26

Traffic
management
active?

S28

Do not cleanse

S27

Cleanse received
value

Fig. 10